# EUROPEAN PATENT APPLICATION

(11) **EP 3 785 898 A1**
(43) Date of publication of application: **03.03.2021**
(21) Application number: 19791505.1
(22) Date of filing: 24.04.2019
(51) Int. Cl.: B32B 7/06, B32B 27/00, C08J 7/04

(54) **SURFACE MODIFICATION SHEET, SURFACE MODIFICATION MEMBER, COATED ARTICLE AND METHOD FOR PRODUCING COATED ARTICLE**

(30) Priority: 26.04.2018 JP 2018085671
(71) Applicant: NITTO DENKO CORPORATION, Ibaraki-shi Osaka 567-8680 (JP)
(72) Inventor: NAKAO, Eriko, Ibaraki-shi, Osaka 567-8680 (JP); ENDO, Asuka, Ibaraki-shi, Osaka 567-8680 (JP); OKADA, Kenichi, Ibaraki-shi, Osaka 567-8680 (JP); MAKIHATA, Yosuke, Ibaraki-shi, Osaka 567-8680 (JP); SHIMOKAWA, Kayo, Ibaraki-shi, Osaka 567-8680 (JP)
(74) Representative: Müller-Boré & Partner Patentanwälte PartG mbB
(86) International application number: PCT/JP2019/017525
(87) International publication number: WO 2019/208666

(57) **Abstract**

The present invention relates to a surface-modifying sheet including a release sheet and a surface-modifying layer, the surface-modifying layer having an average thickness of 0.1 µm to 50 µm, and the difference between the maximum value and the minimum value of the thickness of the surface-modifying layer being less than twice the average thickness; and a surface-modified member, a coated article and a method for producing a coated article, using the surface-modifying sheet.

## Description

### TECHNICAL FIELD

The present invention relates to a surface-modifying sheet, a surface-modified member, a coated article and a method for producing a coated article.

### BACKGROUND ART

In recent years, a resin having lightweight and excellent shock resistance is used in a member of transport equipment such as railway vehicles, aircrafts, ships and automobiles, electronic equipment, housing equipment, and the like, and an adherend of various materials is joined to the surface thereof. Furthermore, a coating film having various functions is formed on a resin member.

In joining a resin member to a metal or other resin, the resin member must be sufficiently adhered thereto. A rubber epoxy-based curable resin composition is conventionally known as such an adhesive (for example, Patent Literature 1).

However, the resin member is incompatible with an adhesive, and the use of the conventional adhesive or adhesive sheet does not allow for obtaining sufficient adhesive strength. Furthermore, a resin member having excellent strength such as a carbon fiber composite material (CFRP) is required to have a high level of adhesive strength.

For this reason, application of a primer solution and various surface treatments such as a sandblast treatment, a corona treatment or a plasma treatment, as a pretreatment prior to the application of a primer solution are necessary for adhesion of a resin member.

For example, the means for obtaining sufficient adhesive strength includes a technology of applying an appropriate primer solution in order to modify the surface of a thermoplastic resin member (for example, Patent Literature 2), but it has a problem that sufficient adhesive strength cannot be exerted in the case of a resin having high solvent resistance (for example, PPS, PA or PP). In such a surface treatment method, a surface treatment step and a drying step must be set, leading to an increase of steps and a decrease in productivity. This involves the problem in cost.

Furthermore, one of the means for imparting sufficient adhesive strength to a resin member is the technology of using a surface-modifying sheet.

For example, Patent Literature 3 describes a surface-modifying sheet that can impart sufficient adhesive strength to a resin member.

On the other hand, various resins are used as a base polymer in a coating film. However, performing coating directly to a resin member causes the problem such as unevenness and coating film peeling.

Application of a primer solution to the surface of a member formed by a resin and a treatment such as a sandblast treatment, a corona treatment or a plasma treatment as a pretreatment are necessary even prior to the application of a coating film, and this leads to the problem of reducing productivity.

Furthermore, it is necessary to use a release agent in molding a resin with a mold. The surface of a resin member is contaminated with the release agent, and thus, a coating film having sufficient strength cannot be formed on the surface of the resin member. For this reason, a cleaning treatment step or a polishing treatment step for removing the release agent is necessary. As a result, this involves the problem of cost rise such as capital investment and running costs for performing those steps.

### CITATION LIST

### PATENT LITERATURE

Patent Literature 1: Japanese Patent No. 3229467
Patent Literature 2: JP 2000-226536 A
Patent Literature 3: JP 2017-128722 A

### SUMMARY OF INVENTION

### PROBLEM TO BE SOLVED

Coated surface is required to be smooth from the standpoints of designability and strength of a coating film, and a coating film is required to be evenly formed uniformly. To achieve this, the surface is necessary to be smooth even after a primer solution has been applied in order to modify the surface of a resin member.

However, the adhesive, the primer solution and the surface-modifying sheet described in Patent Literatures 1 to 3 are used in joining a thermoplastic resin to a metal or other resin member, and those patent literatures do not contain any description relating to the use for forming a coating film on the surface of a resin member.

In view of the above problems, an object of the present invention is to provide a surface-modifying sheet that has excellent adhesive strength, prevents occurrence of unevenness, can form a smooth surface-modifying layer in a uniform thickness and can perform integral molding of the surface-modifying layer and a resin member in forming a surface-modified member. Other objects of the present invention are to provide a surface-modified member, a coated article and a method for producing a coated article, using the surface-modifying sheet.

### SOLUTION TO PROBLEM

The present inventors made intensive investigations to solve the above-described problems. As a result, they have found that by forming a surface-modifying layer into a sheet shape and setting the difference between the maximum value and the minimum value of the thickness of the surface-modifying sheet to less than twice the average thickness while maintaining the average thickness in a specific range, a surface-modifying layer can be evenly formed on any place while exerting sufficient adhesive strength, and have completed the present invention.

One embodiment of the present invention relates to a surface-modifying sheet comprising a release sheet and a surface-modifying layer, wherein the surface-modifying layer has an average thickness of 0.1 µm to 50 µm and the difference between the maximum value and the minimum value of the thickness of the surface-modifying layer is less than twice the average thickness.

In one embodiment of the present invention, concave-convex defect is preferably not present on the surface of the surface-modifying layer.

In one embodiment of the present invention, the surface-modifying layer contains a polymer component, and the polymer component may contain at least one selected from a methoxymethyl group-containing polymer, a hydroxy group-containing polymer, a carboxyl group-containing polymer and an amino group-containing polymer.

In one embodiment of the present invention, the release sheet may have a melting point of 200°C or higher and tensile modulus at 100°C of 1 GPa or less.

One embodiment of the present invention is a surface-modified prepreg in which the surface-modifying layer of the surface-modifying sheet is laminated on at least a part of the surface of a resin member, wherein a mixed layer that the resin member and the surface-modifying layer are mixed is provided between the resin member and the surface-modifying layer.

One embodiment of the present invention is a surface-modified member in which the surface-modifying layer of the surface-modifying sheet is laminated on at least a part of the surface of a resin member, wherein a mixed layer that the resin member and the surface-modifying layer are mixed is provided between the resin member and the surface-modifying layer..

One embodiment of the present invention is a coated article in which a coating film is provided on at least a part of the surface of the surface-modifying layer-side of the surface-modified member.

In one embodiment of the present invention, the coating film in the coating film may be at least one selected from a paint, a printed layer, a deposited layer and a plated layer.

One embodiment of the present invention is a method for producing a coated article, comprising placing the surface-modifying layer-side of the surface-modifying sheet on at least a part of the surface of a resin member to form a surface-modified member, and forming a coating film on the surface-modifying layer-side of the surface-modified member.

In one embodiment of the present invention, the resin member preferably contains a thermoplastic resin or a thermosetting resin, in the method for producing the coated article.

In one embodiment of the present invention, the surface-modified member may be formed by resin molding, in the method for producing the coated article.

One embodiment of the present invention is a method for producing a coated article in which a coating film is provided on at least a part of a surface-modified member in which a surface-modifying layer is laminated on a resin member,
wherein the resin member contains a thermoplastic resin having a melting point of T₁°C, and
the method comprising:
providing the surface-modifying layer on at least a part of the surface of the resin member, and heat-welding at a temperature of (T₁-50)°C or higher, thereby forming the surface-modified member, and
forming the coating film on the surface-modifying layer-side of the surface-modified member.

One embodiment of the present invention is a method for producing a coated article in which a coating film is provided on at least a part of a surface-modified member in which a surface-modifying layer is laminated on a resin member,
wherein the resin member contains a thermosetting resin having a curing temperature of T₂°C, and
the method comprising:
providing the surface-modifying layer on at least a part of the surface of the resin member, and heat-molding at a temperature of T₂°C or higher, thereby forming the surface-modified member, and
forming the coating film on the surface-modifying layer-side of the surface-modified member.

In one embodiment of the present invention, the heat molding is conducted by resin molding, in the method for producing a coated article.

In one embodiment of the present invention, the molding of the resin member may be conducted by the resin molding, in the method for producing a coated article.

In one embodiment of the present invention, the method for producing a coated article may comprise:
placing the surface-modifying layer-side of the surface-modifying sheet that is a laminate of a release sheet and the surface-modifying layer on at least a part of the surface of the resin member, thereby forming the surface-modified member; and
forming the coating film on the surface-modifying layer-side of the surface-modified member.

In one embodiment of the present invention, the method for producing a coated article is preferably that the release sheet is removed after heat molding.

One embodiment of the present invention is a method for producing a coated article in which a coating film is provided at least a part of a surface-modified member in which a surface-modifying layer is laminated on a resin member, the method comprising:
making at least a part of the surface of the resin member into a molten state or a softened state and then providing the surface-modifying layer on the surface of the resin member in a molten state or a softened state, thereby forming the resin member; and
forming a coating film on the surface-modifying layer-side of the resin member.

In one embodiment of the present invention, the surface-modifying layer may contain a polymer component and the polymer component has a non-polar unit and a polar unit having a polar group, in the method for producing a coated article.

In one embodiment of the present invention, the polymer component may be at least one selected from a methoxymethyl group-containing polymer, a hydroxy group-containing polymer, a carboxyl group-containing polymer and an amino group-containing polymer, in the method for producing a coated article.

In one embodiment of the present invention, the surface-modifying layer preferably contains at least one selected from a tertiary amine-containing compound and a strong acid, in the method for producing a coated article.

### ADVANTAGEOUS EFFECTS OF INVENTION

The surface-modifying sheet according to one embodiment of the present invention can modify the surface of a member and can form a surface-modifying layer having excellent adhesive strength. Furthermore, the surface-modifying sheet can prevent occurrence of unevenness and can form a smooth surface-modifying layer in a uniform thickness on the surface of a member. Additionally, the surface-modifying layer and a resin member can be integrally molded when molding a surface-modified member.

The surface-modified member according to one embodiment of the present invention has excellent adhesive strength to a coating film, and a coated article having excellent strength can be formed.

### BRIEF DESCRIPTION OF DRAWINGS

FIG. 1 is a schematic cross-sectional view showing one example of a resin member.
FIG. 2 is a schematic cross-sectional view showing one example of a surface-modifying sheet.

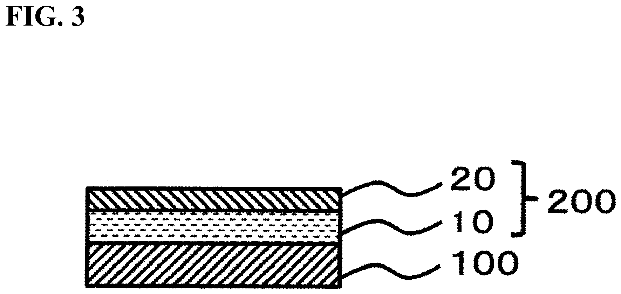

FIG. 3 is a schematic cross-sectional view showing an embodiment that the surface-modifying layer-side of a surface-modifying sheet that is a laminate of a release sheet and a surface-modifying layer is placed on at least a part of the surface of a resin member.
FIG. 4 is a schematic cross-sectional view showing one example of a coated article.
FIG. 5 is a view showing photographs of the results of a cross-cut peel test of the coated articles according to Example 1, Comparative Examples 1 and 2, and Example 35.

### DESCRIPTION OF EMBODIMENTS

The embodiments of the present invention are described in detail below.

The surface-modifying sheet according to the embodiment of the present invention comprises a release sheet and a surface-modifying layer, wherein the surface-modifying layer has an average thickness of 0.1 µm to 50 µm and the difference between the maximum value and the minimum value of the thickness of the surface-modifying layer is less than twice the average thickness.

In the surface-modifying sheet according to the embodiment of the present invention, the surface-modifying layer has a sheet shape. Thus, the surface-modifying layer is not painted on the surface of a member, but is placed thereon. Hence, the surface-modifying sheet and the member can be integrally molded by heat treatment, and unevenness due to occurrence of cissing or the like can be prevented from occurring, and a surface-modifying layer can be formed in a uniform thickness on the surface of the member. Furthermore, the decrease of yield due to protrusion or the like can be suppressed in providing the surface-modifying layer on a part of the surface of the member.

### (Surface-modifying layer)

The surface-modifying layer according to the embodiment of the present invention has an average thickness of 0.1 to 50 µm and the difference between the maximum value and the minimum value of the thickness of the surface-modifying layer is less than twice the average value. The difference is preferably 1.5 times or less and more preferably 1 time or less. The lower value of the difference between the maximum value and the minimum value is most preferably 0 based on its definition.

The difference between the maximum value and the minimum value of the thickness of the surface-modifying layer is calculated from (maximum value-minimum value).

The average thickness is preferably 0.5 µm or more and more preferably 1.0 µm or more, from the standpoint of ensuring adhesive strength. On the other hand, the average thickness is preferably 40 µm or less and more preferably 20 µm or less, for the adjustment of adhesive strength.

Regarding the thickness of the surface-modifying layer, the thickness of the surface-modifying sheet is measured by a dial thickness gauge (for example, PEACOCK GC-9), the thickness of the release sheet of the measurement point from which the surface-modifying layer has been removed is measured, and the difference can be measured as the thickness of the surface-modifying layer.

The average thickness of the surface-modifying layer is an average value of 10 points measured.

The surface-modifying layer is evenly formed as the difference between the maximum value and the minimum value is small, and the surface is smooth. When the difference between the maximum value and the minimum value of the thickness of the surface-modifying layer is less than twice the average thickness of the surface-modifying layer, a coating film having excellent strength can be evenly formed on the surface-modifying layer, and this is suitable for painting.

The difference between the maximum value and the minimum value of the thickness of the surface-modifying layer can be less than twice the average thickness by forming the surface-modifying layer in a uniform thickness or decreasing concave-convex defect on the surface of the surface-modifying layer.

The concave-convex defect means a convex part having a height from the surface of 0.1 µm or more and a diameter of 200 µm or more, and a concave part having a depth from the surface of 0.1 µm or less and a diameter of 200 µm or more, in the convex parts and concave parts occurred on the surface of the surface-modifying layer by a gelled product derived from materials in the surface-modifying layer, contamination of foreign matter when coating, concave-convex of a release sheet, or the like. The concave-convex defect remains on the surface of the surface-modifying member even after using in the surface-modified member.

The shape of the concave part and the convex part is not limited to a circular shape and is sometimes an elliptical shape or an irregular shape. For the diameter in this case, an average of a length in a long axis direction and a length in a short axis direction of the elliptical shape is calculated as the diameter. Furthermore, when the shape of the concave part and the convex part is not a circular and an elliptical shape, the diameter is calculated by approximating it to a circle or an ellipse.

When a coating film is painted on the surface-modified member having a convex part, the coating film accumulates around the convex part, point defect occurs, and the appearance of a coated article is impaired. The point defect part has low adhesiveness and a coating film is easy to peel to decrease strength of a coating film. Convex part can be made difficult to occur by preventing formation of a gelled product in the surface-modifying layer, contamination of a foreign matter when coating and the like.

The convex part sometimes occurs by contamination of a foreign matter when coating or concave-convex of a release sheet, and becomes a defect impairing the appearance of a coated article.

In the surface-modifying layer, concavo-convex defect is preferably not present on the surface.

Formation of the surface-modifying layer in a uniform thickness is achieved by, for example, suppressing formation of a gelled product derived from materials in a solution containing of materials of the surface-modifying layer and a solvent, preventing foreign matter contamination, or using a release sheet having satisfactory smoothness. Gelation can be suppressed by the kind of a solvent used, mixing ratio or the like. Furthermore, a gelled product formed and foreign matter can be removed by filtration or the like.

The surface-modifying layer (or may be a material of the surface-modifying layer) preferably contains a polymer component, and the polymer component more preferably has a non-polar unit and a polar unit having a polar group. The content ratio of the polymer component in the surface-modifying layer is preferably 50 mass % to 100 mass %, more preferably 70 mass % to 100 mass %, still more preferably 90 mass % to 100 mass %, particularly preferably 92 mass % to 100 mass % and most preferably 95 mass % to 100 mass %.

The non-polar unit in the polymer component includes a polyethylene unit, a polypropylene unit and a polystyrene unit. The non-polar unit may be one kind alone and may be two or more kinds.

The polar unit having a polar group in the polymer component includes an epoxy group, a carboxyl group, a nitrile group, an amide group, an ester group, a hydroxy group, an acid anhydride group and a silanol group. The polar unit having the polar group includes a glycidyl methacrylate unit, a vinyl acetate unit, an acrylonitrile unit, an amide unit, a (meth)acrylic acid ester unit, a hydroxyethyl (meth)acrylate unit and a maleic anhydride unit. The polar unit may be one kind alone and may be two or more kinds.

The polymer component that can be contained in the surface-modifying layer (may be a material of the surface-modifying layer) may be at least one selected from a methoxymethyl group-containing polymer, a hydroxy group-containing polymer, a carboxyl group-containing polymer and an amino group-containing polymer.

The polymer component that can be contained in the surface-modifying layer (may be a material of the surface-modifying layer) is preferably an addition-type curing agent and more preferably an addition-type curing agent that reacts with an epoxy group.

The methoxymethyl group-containing polymer includes a methoxymethylated polyamide resin.

As the methoxymethyl group-containing polymer, for example, the commercially available product may be used. The commercially available product includes Fine Resin (registered trademark) Series (manufactured by Namariichi Co., Ltd.).

The methoxymethyl group-containing polymer may be one kind and may be two or more kinds.

The methoxymethyl group-containing polymer has a weight average molecular weight (Mw) of preferably 1000 to 1000000, more preferably 3000 to 500000, still more preferably 5000 to 100000, particularly preferably 7000 to 70000 and most preferably 10000 to 50000, for further exerting the effects of the present invention. Measuring method of the weight average molecular weight (Mw) is described hereinafter.

The hydroxy group-containing polymer includes a hydroxy group-containing acrylic polymer.

As the hydroxy group-containing polymer, the commercially available product may be used. The commercially available product includes ARUFON (registered trademark) UH-2000 Series (manufactured by Toagosei Co., Ltd.).

The hydroxy group-containing polymer may be one kind and may be two or more kinds.

The hydroxy group-containing polymer has a weight average molecular weight (Mw) of preferably 500 to 1000000, more preferably 700 to 500000, still more preferably 1000 to 100000, particularly preferably 1500 to 70000 and most preferably 2000 to 50000, for further exerting the effects of the present invention. Measuring method of the weight average molecular weight (Mw) is described hereinafter.

The carboxyl group-containing polymer includes a carboxyl group-containing acrylic polymer.

As the carboxyl group-containing polymer, the commercially available product may be used. The commercially available product includes ARUFON (registered trademark) UC-3000 Series (manufactured by Toagosei Co., Ltd.).

The carboxyl group-containing polymer may be one kind and may be two or more kinds.

The carboxyl group-containing polymer has a weight average molecular weight (Mw) of preferably 500 to 1000000, more preferably 700 to 500000, still more preferably 1000 to 100000, particularly preferably 1500 to 70000 and most preferably 2000 to 50000, for further exerting the effects of the present invention. The weight average molecular weight (Mw) used is a molecular weight in terms of polystyrene in GPC measurement.

As the amino group-containing polymer, any appropriate polymer can be used to the extent that the effects of the present invention are not impaired so long as it is a polymer containing an amino group (-NH₂).

As the amino group-containing polymer, the commercially available product may be used.

The amino group-containing polymer may be one kind and may be two or more kinds.

The surface-modifying layer (may be a material of the surface-modifying layer) may contain at least one selected from a tertiary amine-containing compound and a strong acid.

The tertiary amine-containing compound and strong acid that can be contained in the surface-modifying layer (may be a material of the surface-modifying layer) are preferably a catalyst-type curing agent and more preferably a catalyst-type curing agent that reacts with an epoxy group.

The tertiary amine-containing compound includes an imidazole derivative and polyethylene imine.

As the tertiary amine-containing compound, the commercially available product may be used. The commercially available product includes CUREZOL Series (imidazole type epoxy resin curing agent, manufactured by Shikoku Chemicals Corporation) as an imidazole derivative, and includes EPOMIN (registered trademark) Series (Nippon Shokubai Co., Ltd.) as polyethylene imine.

The tertiary amine-containing compound may be one kind and may be two or more kinds.

The strong acid includes trifluoroborane, ionic liquid and Nafion.

The ionic liquid includes BF₃-C₂H₅NH₂ and HMI-PF₆.

As the strong acid, the commercially available product may be used.

The strong acid may be one kind and may be two or more kinds.

### [Release sheet]

The release sheet according to the embodiment of the present invention preferably has a melting point of 200°C or higher and tensile modulus at 100°C of 1 GPa or less.

The melting point of the release sheet is preferably 200°C or higher, more preferably 220°C or higher and still more preferably 260°C or higher, from the standpoint of heat resistance. The release sheet having heat resistance corresponding to a molding temperature suffices, and thus, the melting point is preferably 500°C or lower, more preferably 450°C or lower and still more preferably 430°C or lower.

The tensile modulus at 100°C of the release sheet is preferably 1 GPa or less, more preferably 0.5 GPa or less and still more preferably 0.2 GPa or less, for followability to a curved surface when molding.

When the release sheet has a melting point of 200°C or higher and tensile modulus at 100°C of 1 GPa or less, the release sheet has excellent heat resistance and can form a surface-modifying sheet that can mold a surface-modified member by integral molding with a resin member. The lower limit of the tensile modulus at 100°C is not limited, but is preferably 1 MPa or more and more preferably 10 MPa or more, in order to form a surface-modifying sheet that is easy to exert followability to a curved surface and can be applied to a member having a shape of a complicated three-dimensional curved surface.

The tensile modulus means tensile modulus measured by the following method using a single-layered resin film constituted of a resin member constituting the part to be measured, as a measurement sample. Specifically, the release sheet was cut into a strip shape having a width of 5 mm as MD being a longitudinal direction to prepare a test piece. The distance between chucks was set to 10 mm, and temperature dispersion of 25°C to 150°C was performed with a viscoelasticity measuring instrument RSAIII manufactured by TA Instruments. In this temperature dispersion, a temperature rising rate was 5°C/min and a frequency was 1 Hz. In this case, elastic modulus at 100°C was defined as tensile modulus.

The tensile modulus can be adjusted by the constitution of the release sheet, the materials used, a combination of those, and the like.

The release sheet includes a fluorine resin sheet film (NITOFLON, manufactured by Nitto Denko Corporation), a polyester resin sheet, a polymethyl pentene resin sheet (OPULENT (registered trademark), manufactured by Mitsui Chemicals Tohcello, Inc.), a polystyrene resin sheet (Oidys (registered trademark), manufactured by Kurabo Industries Ltd.)

The thickness of the release sheet is preferably 5 µm or more, more preferably 10 µm or more, still more preferably 20 µm or more and particularly preferably 30 µm or more, from the standpoints of handling and processability. Furthermore, to form a surface-modifying sheet that is easy to exerting followability to a curved surface and can be applied to a member having a shape of a complicated three-dimensional curved surface, the thickness is preferably 300 µm or less, more preferably 200 µm or less and still more preferably 100 µm or less.

### [Production of surface-modifying sheet]

The surface-modifying sheet can be produced by any appropriate method. For example, the method includes a method of dipping a release sheet in a solution (surface-modifying composition) containing a material of a surface-modifying layer and a solvent and then drying as necessary, a method of brushing the solution containing a material of a surface-modifying layer and a solvent to the surface of a release sheet and then drying as necessary, a method of applying the solution containing a material of the surface-modifying layer and a solvent to the surface of a release sheet by various coaters and then drying as necessary, and a method of spray coating the solution containing a material of the surface-modifying layer and a solvent to the surface of a release sheet and then drying as necessary.

The surface-modifying composition includes a solution obtained by dissolving a material of the surface-modifying layer in a solvent.

The solvent includes water; alcohols such as methanol, ethanol or isopropyl alcohol; ketones such as methyl ethyl ketone; esters; aliphatic, alicyclic and aromatic hydrocarbons; halogenated hydrocarbons; amides such as dimethyl formamide; sulfoxides such as dimethyl sulfoxide; and ethers such as dimethyl ether or tetrahydrofuran. Ethanol or a mixed solvent of ethanol and water are preferred in order to suppress formation of a gelled product. The solvent may be one kind alone and may be two or more kinds.

The solid content concentration in the surface-modifying composition can be appropriately set depending on the purpose. The mass ratio is preferably 0.01 mass % to 20 mass %, more preferably 0.05 mass % to 10 mass % and still more preferably 0.1 mass % to 5 mass %, from the standpoint of thickness accuracy of the surface-modifying layer.

The surface-modifying composition may contain various additives such as a pH regulator, a crosslinking agent, a viscosity modifier (thickener or the like), a leveling agent, a peel controlling agent, a plasticizer, a softener, a filler, a coloring agent (pigment, dye or the like), a surfactant, an antistatic agent, a preservative, an age resistor, an ultraviolet absorber, an antioxidant and a light stabilizer, as necessary.

For example, by adding a coloring agent, the surface-modifying layer is visualized and the distinction as to whether the surface of the resin member has already been modified is easy to discriminate. Those are merits in process control.

The coloring agent includes a dye and a pigment. The coloring agent may be a fluorescent material that can be visually recognized by black light.

### [Surface-modified prepreg]

The surface-modifying prepreg according to the embodiment of the present invention is a surface-modifying prepreg in which the surface-modifying layer of the surface-modifying sheet is laminated on at least a part of the surface of a resin member, wherein a mixed layer that the resin member and the surface-modifying layer are mixed is provided between the resin member and the surface-modifying layer.

The above descriptions can be applied to the surface-modifying sheet, the surface-modifying layer and the resin member as they are.

The prepreg used herein means a product obtained by impregnating a reinforcing material such as carbon fibers or glass fibers with a resin having additives such as a curing agent, and heating or drying to make it into a semi-cured state.

### [Surface-modified member]

The surface-modified member according to the embodiment of the present invention is a surface-modified member in which the surface-modifying layer of the surface-modifying sheet is laminated on at least a part of the surface of a resin member, wherein a mixed layer that the resin member and the surface-modifying layer are mixed is provided between the resin member and the surface-modifying layer..

The above descriptions can be applied to the surface-modifying sheet and the surface-modifying layer as they are.

The mixed layer is a layer that the resin member and the surface-modifying layer are mixed, and is, for example, a layer of a mixed part obtained by providing the surface-modifying layer on at least a part of the surface of the resin member and heat molding so that the interfaces of the surface-modifying layer and the resin member are melted and contacted to each other and those are welded and mixed or chemically bonded. The formation of the mixed layer improves adhesive strength between the resin member and the surface-modifying layer. In the mixed layer, the resin contained in the resin member and the polymer component constituting the surface-modifying layer are preferably bonded to each other by chemical reaction such as covalent bond. The interface between the resin member and the surface-modifying layer disappears by chemical reaction such as covalent bond, and the resin member and the surface-modifying layer are integrated to result in obtaining more excellent adhesive strength.

The thickness of the mixed layer can be appropriately determined depending on the conditions of heat molding and the kind of the resin member and the surface-modifying layer. The thickness of the mixed layer is preferably 1.5 nm or more and more preferably 2.0 nm or more.

In the embodiments of the present invention, the resin contained in the resin member may be a thermoplastic resin and may be a thermosetting resin.

### (Thermoplastic resin)

The thermoplastic resin includes PP (polypropylene), PA (polyamide), PPE (polyphenylene ether), PPS (polyphenylene sulfide), PET (polyethylene terephthalate), PBT (polybutylene terephthalate), POM (polyacetal), PEEK (polyether ether ketone) and PC (polycarbonate). Of those resins, the thermoplastic resin that can advantageously exert the effects of the present invention includes PPS (polyphenylene sulfide), PA (polyamide) and PP (polypropylene).

As the thermoplastic resin, a fiber reinforced thermoplastic resin (FRTP) can be used.

The fiber reinforced thermoplastic resin (FRTP) includes a carbon fiber reinforced thermoplastic resin (CFRTP) and a glass fiber reinforced thermoplastic resin (GFRTP).

The carbon fiber reinforced thermoplastic resin (CFRTP) includes a PPS type carbon fiber reinforced thermoplastic resin, a PA type carbon fiber reinforced thermoplastic resin and a PP type carbon fiber reinforced thermoplastic resin.

The glass fiber reinforced thermoplastic resin (GFRTP) includes a PPS type glass fiber reinforced thermoplastic resin, a PA type glass fiber reinforced thermoplastic resin and a PP type glass fiber reinforced thermoplastic resin.

### (Thermosetting resin)

The thermosetting resin includes an unsaturated polyester resin, a vinyl ester resin, an epoxy resin, a melamine resin, a phenol resin, a urethane resin, a polyisocyanate resin, a polyisocyanurate resin and a polyimide resin.

As the thermosetting resin, a fiber reinforced thermosetting resin can be used.

The fiber reinforced thermosetting resin includes a carbon fiber reinforced thermosetting resin and a glass fiber reinforced thermosetting resin.

The shape of the resin member includes a plate shape having a flat surface, and a plate shape having a curved surface, a sheet shape and a film shape.

The thickness of the resin member is, for example, 0.001 mm to 10 mm.

### <Method for producing surface-modified member>

The method for producing a surface-modified member according to the embodiment of the present invention is not limited, but the surface-modified member can be produced by, for example, placing the surface-modifying layer-side of a surface-modifying sheet that is a laminate of a release sheet and a surface-modifying layer on at least a part of the surface of a resin member, and heat-molding.

The polymer component contained in the surface-modifying layer is melt mixed with or reacted to chemically bond with a resin contained in the resin member. As a result, the interface between the surface-modified layer and the resin members is melt contacted to be melt mixed or chemically bonded, and the surface-modified member can be formed.

The heat molding may be conducted simultaneously with placing of the surface-modifying sheet and may be conducted after placing the surface-modifying sheet.

By conducting the surface treatment of the resin member by the method as above, sufficient adhesive strength can be imparted to the resin member and the surface-modified member can be produced with high productivity and at low cost. The method for producing a surface-modified member may be a method for treating the surface of the resin member (a surface treatment method of the resin member).

The above descriptions can be applied to the resin member, the surface-modifying layer, the release sheet and the surface-modifying layer as they are.

The term "at least a part of the surface of the resin member" means at least a part of the entire surface of the resin member. For example, when the resin member has a plate shape, a sheet shape or a film shape, the term means a part of at least one surface or the entire of at least one surface.

In the case that the resin contained in the resin member is a thermoplastic resin in the production of the surface-modified member, when the melting point of the thermoplastic resin is T₁°C, it is preferred that the surface-modifying layer is provided on at least a part of the surface of the thermoplastic resin and heat welding is conducted at a temperature of (Ti-50)°C or higher. The temperature of the heat welding is preferably (T₁-50)°C to (T₁+150)°C, more preferably (T₁-25)°C to (T₁+100)°C, still more preferably (T₁-10)°C to (T₁+75)°C and particularly preferably (T₁)°C to (T₁+50)°C.

In the case that the resin contained in the resin member is a thermosetting resin in the production of a surface-modified member, when the melting point of the thermosetting resin is T₂°C, it is preferred that the surface-modifying layer is provided on at least a part of the surface of the thermosetting resin and heat molding is conducted at a temperature of T₂°C or higher. The temperature of the heat molding is preferably (T₂-50)°C to (T₂+150)°C, more preferably (T₂-25)°C to (T₂+100)°C, still more preferably (T₂-10)°C to (T₂+75)°C and particularly preferably (T₂)°C to (T₂+50)°C.

Conducting the surface treatment of the resin member by the above method such that the heat molding temperature is in the above range allows the interface between the surface-modifying layer and the resin member to be melt contacted to be melt mixed or chemically bonded, and sufficient adhesive strength can be imparted to the resin member. Additionally, such an impartation can be performed with high productivity and at low cost.

After making at least a part of the surface of the resin member into a molten state or a softened state, the surface-modifying layer can be provided on the surface of the resin member in a molten state or a softened state. By providing the surface-modifying layer on the surface of the resin member in a molten state or a softened state, the surface-modifying layer is welded and mixed or chemically bonded by the heat of the surface of the resin member, and sufficient adhesive strength can be imparted to the resin member.

The term "molten state" means a state that at least a part of the surface of the resin member is melted, and can be preferably achieved by heating the resin member at a temperature of its melting point or higher.

The term "softened state" means a state that at least a part of the surface of the resin member is softened, and can be preferably achieved by heating the resin member at a temperature of its softening temperature or higher.

The method of heat molding includes oven heating, infrared heating, high frequency heating and hot press. The heat molding is conducted by preferably resin molding and more preferably hot press (press molding).

The time of heat molding is preferably 1 second to 10 minutes.

One embodiment of the hot press is, for example, that the surface-modifying layer-side of the surface-modifying sheet is placed on at least a part of the resin member in a molding machine (for example, a press machine) and molding involving heating (for example, integral molding by hot press) is conducted. According to this embodiment, the molding of the resin member can be conducted simultaneously with the surface treatment of the resin member and thus, the embodiment can be performed with high productivity and at low cost. The molding of the resin member may be injection molding.

The injection molding can use an injection molding machine equipped with a movable mold and a stationary mold. For example, a surface-modifying sheet is provided on a concave part of a cavity of a movable mold such that a release sheet faces, and the movable mold and a stationary mold are clamped. A molten resin is injected into the cavity.

After cooling and solidifying the resin in the mold, the movable mold is separated from the stationary mold. Thus, a surface-modified member that the surface-modifying sheet and the resin member are integrated is obtained.

By peeling off the release sheet from the surface-modified member, the surface-modified member having the surface-modifying layer on the surface thereof is obtained. The peeling of the release sheet is conducted by hand, conducted using an exclusive peeling equipment or the like, and is not limited.

After placing a surface-modifying layer-side of the surface-modifying sheet that is a laminate of the release sheet and the surface-modifying layer on at least a part of the surface of the resin member and then heat-molding, the release sheet is preferably removed. By removing the release sheet, the surface-modifying layer is transferred to the surface of the resin member, and the surface-modified member (sometimes referred to as a laminated member of the resin member and the surface-modifying layer) is obtained.

As described before, a mixed layer that the resin member and the surface-modifying layer are mixed is preferably provided between the resin member and the surface-modifying layer.

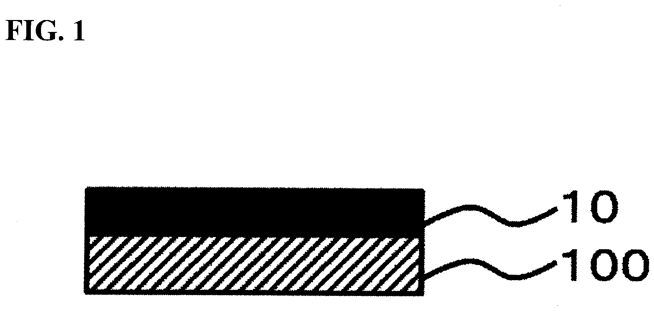

By the above production method, a surface-modifying layer 10 is provided on the surface of a resin member 100 as shown in FIG. 1, and a surface-modified member is obtained. In FIG. 1, the surface-modifying layer 10 is laminated on the surface of the resin member 100, but a mixed layer (not shown) that the resin member and the surface-modifying layer are mixed is preferably provided between the resin member 100 and the surface-modifying layer 10.

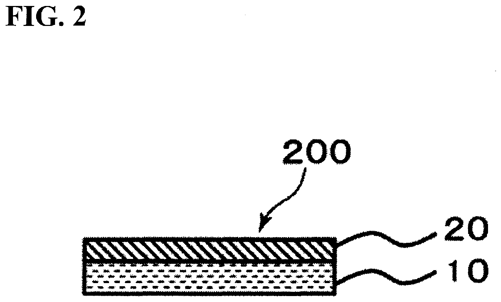

The surface-modifying sheet that is a laminate of the release sheet and the surface-modifying layer is a surface-modifying sheet 200 that is a laminate of a release sheet 20 and the surface-modifying layer 10, as shown in FIG. 2.

In the method for producing a surface-modified member according to the embodiment of the present invention, the embodiment that a surface-modifying layer-side of the surface-modifying sheet that is a laminate of the release sheet and the surface-modifying layer is placed on at least a part of the surface of the resin member is an embodiment that the surface-modifying sheet 200 is placed on the surface of the resin member 100 such that the surface-modifying layer 10 side of the surface-modifying sheet 200 faces the surface side of the resin member 100.

### [Coated article]

The coated article according to the embodiment of the present invention is an article in which a coating film is provided on at least a part of the surface of the surface-modifying layer-side of the surface-modified member. The coating film may be at least one selected from a paint, a printed layer, a deposited layer and a plated layer.

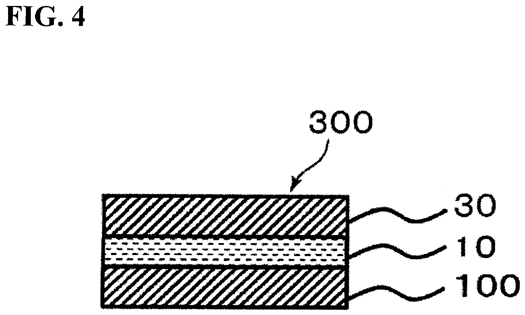

As one example of the coated article according to the embodiment of the present invention, a coated article 300 in which a coating film is provided on at least a part of the surface of the surface-modifying layer-side 10 of the surface-modified member 100 is shown in FIG. 4.

The surface-modifying layer is not formed by painting on the surface of a member, but is formed using a sheet-shaped surface-modifying sheet. Thus, unevenness due to the occurrence of cissing or the like can be prevented from occurring. For this reason, the surface-modifying layer can be formed on the surface of the resin member in uniform thickness, and the coating film can be provided in uniform thickness. Furthermore, by providing the surface-modifying layer on the surface of the resin member that is in a molten state or a softened state, the surface-modifying layer is welded and mixed or chemically bonded by the heat of the surface of the resin member. Since adhesive strength between the surface-modifying layer and the resin member is high, a coating having excellent adhesiveness can be formed. Additionally, in forming a coated article, integral molding between the surface-modifying layer and the resin member is possible. This eliminates the need for a cleaning treatment step and a polishing treatment step using an organic solvent for removing a release agent before forming a coating film and has excellent safety. And this allows for reducing environmental load and workload.

The coating film is not limited but includes various coating films such as an epoxy type, a polyester-melamine type, an alkyd-melamine type, an acryl-melamine type, an acryl-urethane type, and an acryl-polyacid curing agent type.

The thickness of the coating film is not limited but is 0.01 to 2000 µm, more preferably 0.1 to 1000 µm, still more preferably 0.5 to 500 µm and particularly preferably 1 to 200 µm.

The coating method of the coating film is not limited but the ordinary method such as brush coating, roller coating, spray coating or coating with various coaters can be used. The coating amount is not limited. Furthermore, the time and temperature for heating the coating film, and the like can be appropriately determined by a paint used, a coating amount, and the like.

### [Method for producing coated article according to first embodiment]

The method for producing a coated article according to a first embodiment of the present invention includes placing the surface-modifying layer-side of the surface-modifying sheet on at least a part of the surface of a resin member to form a surface-modified member, and forming a coating film on the surface-modifying layer-side of the surface-modified member.

The term "at least a part of the surface of the resin member" means at least a part of the entire surface of the resin member. For example, in the case that the resin member has a plate shape or a film shape, the term means a part of at least one surface or the entire of at least one surface.

The resin contained in the resin member may be a thermosetting resin and may be a thermoplastic resin. The resin is preferably a thermosetting resin.

The thermosetting resin includes a vinyl ester resin, an unsaturated polyester resin, an epoxy resin, a melamine resin, a phenol resin, a phenol resin, a urethane resin, a polyisocyanate resin, a polyisocyanurate resin and a polyimide resin.

The surface-modified member may be molded by resin molding, and the resin molding includes injection molding and press molding.

The above descriptions can be applied to the resin member, the thermoplastic resin, the thermosetting resin, the surface-modifying sheet, the surface-modifying layer and the surface-modified member as they are.

### [Method for producing coated article according to second embodiment]

The method for producing a coated article according to a second embodiment of the present invention is a method for producing a coated article in which a coating film is provided on at least a part of a surface-modified member in which a surface-modifying layer is laminated on a resin member, wherein the resin member contains a thermoplastic resin having a melting point of T₁°C, and the method including providing the surface-modifying layer on at least a part of the surface of the resin member, and performing heat-welding at a temperature of (T₁-50)°C or higher, thereby forming the surface-modified member, and forming the coating film on the surface-modifying layer-side of the surface-modified member.

In the method for producing a coated article according to the second embodiment of the present invention, strong adhesive strength is obtained, and preferably, a surface treatment step conventionally conducted can be reduced. Additionally, in one embodiment of the method for producing a coated article according to the second embodiment of the present invention, conducting a surface treatment simultaneously with the molding eliminates the need for use of a release agent and allows for reducing a step of removing a releasing agent (sandblast treatment, degreasing treatment or the like).

In the method for producing a coated article according to the second embodiment of the present invention, when the melting point of the thermoplastic resin contained in the resin member is T₁°C, the surface-modifying layer is provided on at least a part of the surface of a resin member containing the thermoplastic resin (thermoplastic resin member) and heat welding is conducted at a temperature of (T₁-50)°C or higher. By conducting a surface treatment of the thermoplastic resin member by the method, sufficient adhesive strength can be imparted to the thermoplastic resin member, and preferably such an impartation can be performed with high productivity and at low cost.

The temperature of the heat welding is preferably (T₁-50)°C to (T₁+150)°C, more preferably (T₁-25)°C to (T₁+100)°C, still more preferably (T₁-10)°C to (T₁+75)°C and particularly preferably (T₁)°C to (T₁+50)°C. Conducting the surface treatment of the resin member by the above method such that the heat molding temperature is in the above range allows the interface between the surface-modifying layer and the resin member to be melt contacted to be melt mixed or chemically bonded, and sufficient adhesive strength can be imparted to the resin member. Preferably, such an impartation can be performed with high productivity and at low cost.

The thermoplastic resin contained in the resin member according to the embodiment of the present invention includes PP (polypropylene), PA (polyamide), PPE (polyphenylene ether), PPS (polyphenylene sulfide), PET (polyethylene terephthalate), PBT (polybutylene terephthalate), POM (polyacetal), PEEK (polyether ether ketone) and PC (polycarbonate). Of those resins, the thermoplastic resin that can advantageously exert the effects of the present invention includes PPS (polyphenylene sulfide), PA (polyamide) and PP (polypropylene).

As the thermoplastic resin, a fiber reinforced thermoplastic resin (FRTP) can be used.

The fiber reinforced thermoplastic resin (FRTP) includes a carbon fiber reinforced thermoplastic resin (CFRTP) and a glass fiber reinforced thermoplastic resin (GFRTP).

The carbon fiber reinforced thermoplastic resin (CFRTP) includes a PPS type carbon fiber reinforced thermoplastic resin, a PA type carbon fiber reinforced thermoplastic resin and a PP type carbon fiber reinforced thermoplastic resin.

The glass fiber reinforced thermoplastic resin (GFRTP) includes a PPS type glass fiber reinforced thermoplastic resin, a PA type glass fiber reinforced thermoplastic resin and a PP type glass fiber reinforced thermoplastic resin.

### [Method for producing coated article according to third embodiment]

The method for producing a coated article according to the third embodiment of the present invention is a method for producing a coated article in which a coating film is provided on at least a part of a surface-modified member in which a surface-modifying layer is laminated on a resin member, wherein the resin member contains a thermosetting resin having a curing temperature of T₂°C, and the method including providing the surface-modifying layer on at least a part of the surface of the resin member, and performing heat-molding at a temperature of T₂°C or higher, thereby forming the surface-modified member, and forming the coating film on the surface-modifying layer-side of the surface-modified member.

In the method for producing a coated article according to the third embodiment of the present invention, strong adhesive strength is obtained, and preferably, a surface treatment step conventionally conducted can be reduced. Additionally, in one embodiment of the method for producing a coated article according to the third embodiment of the present invention, conducting a surface treatment simultaneously with the molding eliminates the need for use of a release agent and allows for reducing a step of removing a releasing agent (sandblast treatment, degreasing treatment or the like).

In the method for producing a coated article according to the third embodiment of the present invention, when the melting point of the thermosetting resin contained in the resin member is T₂°C, the surface-modifying layer is provided on at least a part of the surface of the resin member (thermosetting resin member) and heat molding is conducted at a temperature of T₂°C or higher. By conducting a surface treatment of the thermosetting resin member by the above method, sufficient adhesive strength can be imparted to the thermosetting resin member, and preferably, the impartation can be performed with high productivity and at low cost.

The temperature of the heat molding is preferably (T₂-50)°C to (T₂+150)°C, more preferably (T₂-25)°C to (T₂+100)°C, still more preferably (T₂-10)°C to (T₂+75)°C and particularly preferably (T₂)°C to (T₂+50)°C. Conducting the surface treatment of the resin member by the above method such that the heat molding temperature is in the above range allows the interface between the surface-modifying layer and the resin member to be melt contacted to be melt mixed or chemically bonded, and sufficient adhesive strength can be imparted to the resin member. Additionally, such an impartation can be performed with high productivity and at low cost.

The thermosetting resin containing in the resin member according to the embodiment of the present invention includes an unsaturated polyester resin, a vinyl ester resin, an epoxy resin, a melamine resin, a phenol resin, a urethane resin, a polyisocyanate resin, a polyisocyanurate resin and a polyimide resin.

The thermosetting resin may be a fiber reinforced thermosetting resin.

The fiber reinforced thermosetting resin includes a carbon fiber reinforced thermosetting resin and a glass fiber reinforced thermosetting resin.

The terms "at least a part of the surface of the thermoplastic resin" and "at least a part of the surface of the thermosetting resin" mean at least a part of the entire surface of the thermoplastic resin member or the thermosetting resin member. For example, in the case that the thermoplastic resin member or the thermosetting resin member has a plate shape, a sheet shape or a film shape, the terms mean a part of at least one surface or the entire of at least one surface.

The shape of the thermoplastic resin member and the thermosetting resin member includes a plate shape having a flat surface, and a plate shape having a curved surface, a sheet shape and a film shape.

The thickness of the thermoplastic resin member and the thermosetting resin member is, for example, 0.001 mm to 10 mm.

In the method for producing a coated article according to the second embodiment of the present invention or the method for producing a coated article according to the third embodiment of the present invention, the method of providing the surface-modifying layer on at least a part of the surface of the thermoplastic resin member or the thermosetting resin member includes a method of applying a solution containing a material of the surface-modifying layer and a solvent to at least a part of the surface of the thermoplastic resin member or the thermosetting resin member, a method of melt extruding the surface-modifying layer to at least a part of the surface of the thermoplastic resin member or the thermosetting resin member, and a method of laminating the surface-modifying layer in a sheet form on at least a part of the surface of the thermoplastic resin member or the thermosetting resin member.

The method of applying a solution containing a material of the surface-modifying layer according to the embodiment of the present invention and a solvent includes dipping of the thermoplastic resin member or the thermosetting resin member in a solution containing a material of the surface-modifying layer and a solvent, brushing of at least a part of the surface of the thermoplastic resin member or the thermosetting resin member with a solvent containing a material of the surface-modifying layer and a solvent, application of a solution containing a material of the surface-modifying layer and a solvent to at least a part of the surface of the thermoplastic resin member or the thermosetting resin member by various coaters, and spray coating of a solution containing a material of the surface-modifying layer and a solvent to at least a part of the surface of the thermoplastic resin member or the thermosetting resin member.

The solution containing a material of the surface-modifying layer and a solvent includes a solution obtained by dissolving a material of the surface-modifying layer in any appropriate solvent to the extent that the effects of the present invention are not impaired.

The solvent includes alcohols such as methanol, ethanol or isopropyl alcohol; ketones such as methyl ethyl ketone; esters; aliphatic, alicyclic and aromatic hydrocarbons; halogenated hydrocarbons; amides such as dimethyl formamide; sulfoxides such as dimethyl sulfoxide; and ethers such as dimethyl ether or tetrahydrofuran. The solvent may be one kind alone and may be two or more kinds.

The solid content concentration in the solution containing a material of the surface-modifying layer and a solvent can be appropriately set depending on the purpose. The solid content concentration as mass ratio is preferably 0.01 mass % to 20 mass %, more preferably 0.05 mass % to 10 mass % and still more preferably 0.1 mass % to 5 mass %, from the standpoint of easiness of handling and the like.

The solution containing a material of the surface-modifying layer and a solvent may contain any appropriate other component to the extent that the effects of the present invention are not impaired.

The surface-modifying layer (may be a material of the surface-modifying layer) preferably contains a polymer component and the polymer component has a non-polar unit and a polar unit having a polar group. The content ratio of the polymer component in the surface-modifying layer is preferably 50 mass % to 100 mass %, more preferably 70 mass % to 100 mass %, still more preferably 90 mass % to 100 mass %, particularly preferably 92 mass % to 100 mass % and most preferably 95 mass % to 100 mass %.

The non-polar unit in the polymer component includes a polyethylene unit, a polypropylene unit and a polystyrene unit. The non-polar unit may be one kind alone and may be two or more kinds.

The polar unit having a polar group in the polymer component includes an epoxy group, a carboxyl group, a nitrile group, an amide group, an ester group, a hydroxy group, an acid anhydride and a silanol group. The polar unit having a polar group includes a glycidyl methacrylate unit, a vinyl acetate unit, an acrylonitrile unit, an amide unit, a (meth)acrylic acid ester unit, a hydroxyethyl (meth)acrylate unit and a maleic anhydride unit. The polar unit may be one kind alone and may be two or more kinds.

The polymer component that can be contained in the surface-modifying layer (or may be a material of the surface-modifying layer) may be at least one selected from a methoxymethyl group-containing polymer, a hydroxy group-containing polymer, a carboxyl group-containing polymer and an amino group-containing polymer.

The polymer component that can be contained in the surface-modifying layer (or may be a material of the surface-modifying layer) is preferably an addition-type curing agent and more preferably an addition-type curing agent that reacts with an epoxy group.

As the methoxymethyl group-containing polymer, any appropriate polymer can be used to the extent that the effects of the present invention are not impaired so long as it is a polymer containing a methoxymethyl group (-CH₂-OCH₃)-containing polymer. The methoxymethyl group-containing polymer includes a methoxymethylated polyamide resin.

As the methoxymethyl group-containing polymer, the commercially available product may be used. The commercially available product includes Fine Resin (registered trademark) Series (manufactured by Namariichi Co., Ltd.).

The methoxymethyl group-containing polymer may be one kind and may be two or more kinds.

The methoxymethyl group-containing polymer has a weight average molecular weight (Mw) of preferably 1000 to 1000000, more preferably 3000 to 500000, still more preferably 5000 to 100000, particularly preferably 7000 to 70000 and most preferably 10000 to 50000, for further exerting the effects of the present invention. Measuring method of the weight average molecular weight (Mw) is described hereinafter.

As the hydroxy group-containing polymer, any appropriate polymer can be used to the extent that the effects of the present invention are not impaired so long as it is a polymer containing a hydroxy group (-OH). The hydroxy group-containing polymer includes a hydroxy group-containing acrylic polymer.

As the hydroxy group-containing polymer, the commercially available product may be used. The commercially available product includes ARUFON (registered trademark) UH-2000 Series (manufactured by Toagosei Co., Ltd.).

The hydroxy group-containing polymer may be one kind and may be two or more kinds.

The hydroxy group-containing polymer has a weight average molecular weight (Mw) of preferably 500 to 1000000, more preferably 700 to 500000, still more preferably 1000 to 100000, particularly preferably 1500 to 70000 and most preferably 2000 to 50000, for further exerting the effects of the present invention. Measuring method of the weight average molecular weight (Mw) is described hereinafter.

As the carboxyl group-containing polymer, any appropriate polymer can be used to the extent that the effects of the present invention are not impaired so long as it is a polymer containing a carboxyl group (-COOH). The carboxyl group-containing polymer includes a carboxyl group-containing acrylic polymer.

As the carboxyl group-containing polymer, the commercially available product may be used. The commercially available product includes ARUFON (registered trademark) UC-3000 Series (manufactured by Toagosei Co., Ltd.).

The carboxyl group-containing polymer may be one kind and may be two or more kinds.

The carboxyl group-containing polymer has a weight average molecular weight (Mw) of preferably 500 to 1000000, more preferably 700 to 500000, still more preferably 1000 to 100000, particularly preferably 1500 to 70000 and most preferably 2000 to 50000, for further exerting the effects of the present invention. The weight average molecular weight (Mw) used is a molecular weight in terms of polystyrene in GPC measurement.

As the amino group-containing polymer, any appropriate polymer can be used to the extent that the effects of the present invention are not impaired so long as it is a polymer containing an amino group (-NH₂).

As the amino group-containing polymer, the commercially available product may be used.

The amino group-containing polymer may be one kind and may be two or more kinds.

The surface-modifying layer (may be a material of the surface-modifying layer) may contain at least one selected from a tertiary amine-containing compound and a strong acid.

The tertiary amine-containing compound and strong acid that can be contained in the surface-modifying layer (may be a material of the surface-modifying layer) are preferably a catalyst-type curing agent and more preferably a catalyst-type curing agent that reacts with an epoxy group.

As the tertiary amine-containing compound, any appropriate compound can be used to the extent that the effects of the present invention are not impaired so long as it is a compound containing a tertiary amine. The tertiary amine-containing compound includes an imidazole derivative and polyethylene imine.

As the tertiary amine-containing compound, the commercially available product may be used. The commercially available product includes CUREZOL Series (imidazole type epoxy resin curing agent, manufactured by Shikoku Chemicals Corporation) as an imidazole derivative and includes EPOMIN (registered trademark) Series (Nippon Shokubai Co., Ltd.) as polyethylene imine.

The tertiary amine-containing compound may be one kind and may be two or more kinds.

As the strong acid, any appropriate strong acid can be used to the extent that the effects of the present invention are not impaired. The strong acid includes trifluoroborane, ionic liquid and Nafion.

The ionic liquid includes BF₃-C₂H₅NH₂ and HMI-PF₆.

As the strong acid, the commercially available product may be used.

The strong acid may be one kind and may be two or more kinds.

In the case that the solution containing a material of the surface-modifying layer and a solvent has been applied to at least a part of the surface of the thermoplastic resin member or the thermosetting resin member, at least a part of the solvent is then removed by drying. In the drying, at least a part of the solvent is removed. Preferably 50 mass % or more of the solvent is removed, more preferably 80 mass % or more of the solvent is removed, still more preferably 90 mass % or more of the solvent is removed, particularly preferably 95 mass % or more of the solvent is removed, and most preferably all of the solvent is removed.

As the drying method, any appropriate method can be used to the extent that the effects of the present invention are not impaired so long as it is a method that can remove the solvent, such as oven heating, infrared heating or high frequency heating. As the drying temperature, any appropriate temperature can be set depending on a boiling point of the solvent used.

The method of melt-extruding the surface-modifying layer includes a method of melt-extruding a material of the surface-modifying layer to at least a part of the surface of the thermoplastic resin member or the thermosetting resin member by a melt extruder or the like.

The method of laminating the surface-modifying layer having a sheet form includes a method of laminating a surface-modifying layer-side of the surface-modifying sheet (a laminate of the release sheet and the surface-modifying layer), as described in the item of the method for producing the surface-modified member according to the embodiment of the present invention, on at least a part of the surface of the thermoplastic resin member or the thermosetting resin member.

The heat molding method includes oven heating, infrared heating, high frequency heating and hot pressing, and hot pressing is preferred.

The heat molding time is preferably 1 second to 10 minutes.

By the method for producing a coated article according to the second embodiment of the present invention or the method for producing a coated article according to the third embodiment of the present invention, the surface-modifying layer is provided on the surface of the thermoplastic resin member or the thermosetting resin member, the surface-modified member (sometimes referred to as a laminated member of the thermoplastic resin member and the surface-modifying layer) is obtained, the coating film is formed on a surface-modifying layer-side of the surface-modified member, and the coated article is obtained. A mixed layer that the thermoplastic resin member or the thermosetting resin member and the surface-modified member are mixed is preferably provided between the thermoplastic resin member or the thermosetting resin member, and the surface-modifying layer. The thickness of the mixed layer is preferably 1.5 nm or more and more preferably 2.0 nm or more.

The thickness of the surface-modifying layer is preferably 0.001 µm to 100 µm, more preferably 0.01 µm to 10 µm, still more preferably 0.05 µm to 5 µm and particularly preferably 0.1 µm to 3 µm.

The coating film is not limited but includes various coating films such as an acryl type, a urethane type, an epoxy type, a fluorine type, a silicone type, a polyester-melamine type, an alkyd-melamine type, an acryl-melamine type, an acryl-urethane type and an acryl-polyacid curing agent type.

The thickness of the coating film is not limited but is 0.01 to 2000 µm, preferably 0.1 to 1000 µm, still more preferably 0.5 to 500 µm and particularly preferably 1 to 200 µm.

The coating method of the coating film is not limited but ordinary methods such as brushing, roller coating, spray coating and coating by various coaters can be used and a coating amount used thereof is not limited. Furthermore, the time and temperature for heating the coating film can be appropriately determined by a paint used, a coating amount and the like.

### [Method for producing coated article according to fourth embodiment of the present invention]

The method for producing a coated article according to the fourth embodiment of the present invention is a method for producing a coated article in which a coating film is provided at least a part of a surface-modified member in which a surface-modifying layer is laminated on a resin member.

In the method for producing a coated article according to the fourth embodiment of the present invention, at least a part of the surface of the resin member is made into a molten state or a softened state and then the surface-modifying layer is provided on the surface of the resin member in a molten state or a softened state. By conducting the surface treatment of the resin member by the above method, sufficient adhesive strength can be imparted to the resin member, and preferably, the impartation can be performed with high productivity and at low cost.

In the method for producing a coated article according to the fourth embodiment of the present invention, at least a part of the surface of the resin member is made into a molten state or a softened state, and the surface-modifying layer is provided on the surface.

The description in the item of [Method for producing coated article according to first embodiment] can be applied to the term "at least a part of the surface of the resin member" as it is.

The description in the item of [Method for producing coated article according to first embodiment] can be applied to the resin member as it is.

The term "molten state" means a state that at least a part of the surface of the resin member is melted, and is preferably achieved by setting the temperature of the resin member to its melting point or higher.

The term "softened state" means a state that at least a part of the surface of the resin member is softened, and is preferably achieved by heating the resin member such that the temperature of the resin member reaches its softening temperature or higher.

In the method for producing a coated article according to the fourth embodiment of the present invention, at least a part of the surface of the resin member is made into a softened state or a softened state, and the surface-modifying layer is then provided on the surface of the resin member in a molten state or a softened state. By providing the surface-modifying layer on the surface of the resin member in a molten state or a softened state, the surface-modifying layer is welded and mixed by heat of the surface of the resin member, and sufficient adhesive strength can be imparted to the resin member. Preferably, the impartation can be performed with high productivity and at low cost.

The descriptions in the item of [Method for producing coated article according to first embodiment] can be applied to the surface-modifying layer, the coating film and the method for producing a coated film as they are.

In the method for producing a coated article according to the fourth embodiment of the present invention, the method of providing the surface-modifying layer on the surface in a molten state or a softened state of the resin member includes a method of placing the surface-modifying layer-side of the surface-modifying sheet that is a laminate of the release sheet and the surface-modifying layer on the surface of the resin member in a molten state or a softened state. By this method, more sufficient adhesive strength can be imparted to the resin member, and preferably, the impartation can be performed with high productivity and at low cost.

### [Step control method]

In the production of a surface-modifying sheet, the production of a surface-modified member and the production of a coated article according to the embodiments of the present invention, for example, containing additives such as a dye, a pigment or a crystalline substance in the surface-modifying composition or the surface-modifying layer allows the surface-modifying layer to be visualized, and this makes it easy to control the production step.

The above descriptions can be applied to the surface-modifying composition, the surface-modifying sheet, the coated article and the additives as they are.

The step control method includes a method of visually confirming the part colored by the surface treatment and a method of recognizing an image photographed by a camera and discriminating.

### Examples

The present invention is specifically described below by examples, but the present invention is not limited by those examples.

### <Melting point>

Melting point T (°C) of the release sheets used in examples and comparative examples was measured by DSC (differential scanning calorimeter) while rising the temperature from -90°C to 350°C in a temperature rising rate of 2°C/min.

### <Tensile modulus>

A release sheet was cut into a strip shape as MD being a longitudinal direction to prepare a test piece. The distance between chucks was 10 mm, and temperature dispersion of 25 to 150°C was performed with a viscoelasticity measuring instrument RSAIII manufactured by TA Instruments. In this temperature dispersion, a temperature rising rate was 5°C/min and a frequency was 1 Hz. In this case, elastic modulus at 100°C was defined as tensile modulus (MPa).

### <Film thickness>

The thickness of the surface-modifying sheet was measured by a dial thickness gauge (GC-9, manufactured by PEACOCK). The thickness of a surface-modifying sheet was measured, the thickness (µm) of the release sheet at the measurement point from which the surface-modifying layer had been removed was measured, and the difference was defined as the thickness (µm) of the surface-modifying layer. The average thickness (µm) is an average value of 10 points measured.

### (Number of concave-convex defect>

The number of concave-convex defect (number/100 cm²) on the surface-modifying layer was visually counted.

### [Example 1]

### (Surface-modifying sheet (1))

(Fine Resin FR-105 (methoxymethylated polyamide resin), manufactured by Namariichi Co., Ltd./ARUFON (registered trademark) UC-3150 (carboxyl group-containing acrylic polymer), manufactured by Toagosei Co., Ltd. (weight ratio 50/50 mixture)) were dissolved in a mixed solvent of ethanol/water=90 mass %/10 mass% at 40°C to prepare a 10 mass% solution (surface-modifying composition).

The surface-modifying composition prepared was filtered with a nylon mesh having an opening of 188 µm, coated on a release sheet (NITOFLON No. 900UL (thickness: 0.18 mm, size: width 250 mm × length 450 mm), manufactured by Nitto Denko Corporation) by a bar coater, air-dried and further dried in a constant temperature drier at 100°C for 1 minute. Thus, a surface-modifying sheet (1) that is a release sheet having a surface-modifying layer was prepared.

### (Surface-modified member (1))

The surface-modifying sheet (1) prepared above was overlaid on a glass fiber reinforced polyphenylene sulfide (GF-PPS) (size: width 200 mm × length 200 mm × thickness 2 mm) and the resulting assembly was heat-welded by pressing (290°C, 1 minute). Thus, a surface-modified member (1) was prepared.

### (Coated article (1))

After peeling off the release sheet of the surface-modified member (1) prepared above, 99KOBO, body pen solid, manufactured by SOFT99 Corporation was applied to the surface-modifying layer by a spray. Thus, a coated article (1) having a coating film with a thickness of 100 µm was prepared.

### [Examples 2 to 5 and 8]

Surface-modifying sheets, surface-modified members and coated articles were prepared in the same manners as in Example 1, except that the surface-modifying layer and the release sheet were changed as shown in Table 1.

### [Examples 6 and 7]

Surface-modifying sheets, surface-modified members and coated articles were prepared in the same manners as in Example 1, except that the release sheet, the surface-modifying layer and the resin member were changed as shown in Table 1.

### [Examples 9 to 11]

Surface-modifying sheets, surface-modified members and coated articles were prepared in the same manners as in Example 1, except that the release sheet and the resin member were changed as shown in Table 1.

### [Examples 14 to 21]

Surface-modifying sheets, surface-modified members and coated articles were prepared in the same manners as in Example 1, except that the release sheet, the paint and the resin member were changed as shown in Table 2 and the paint was applied by an applicator when coated articles were prepared.

### [Examples 12 and 13]

Surface-modifying sheets, surface-modified members and coated articles were prepared in the same manners as in Example 14, except that the paints were changed as shown in Table 2 and when the coated articles were prepared, after applying the paint, curing was performed at 80°C for 30 minutes.

### [Examples 22, 23 and 30]

Surface-modifying sheets, surface-modified members and coated articles were prepared in the same manners as in Example 14, except that the paints were changed as shown in Table 3 and when the coated articles were prepared, after applying the paint, curing was performed at 160°C for 20 minutes.

### [Examples 25 to 28 and 30 to 32]

Surface-modifying sheets, surface-modified members and coated articles were prepared in the same manners as in Example 1, except that the release sheet, the paint and the resin member were changed as shown in Table 3 and the paint was applied by an applicator when coated articles were prepared.

### [Examples 33 and 34]

Surface-modifying sheets, surface-modified members and coated articles were prepared in the same manners as in Example 1, except that the surface-modifying layer and the release sheet were changed as shown in Table 4.

### [Comparative Example 1]

The surface-modifying composition prepared in Example 1 was applied to a glass fiber reinforced polyphenylene sulfide (size: width 200 mm × length 200 mm × thickness 2 mm) with a spray to provide a surface-modifying layer having a thickness of 30 µm. Thereafter, 99KOBO, body pen solid, manufactured by SOFT99 Corporation was applied to the surface-modifying layer by a spray. Thus, a coated article having a coating film with a thickness of 100 µm was prepared.

### [Comparative Example 2]

A surface-modifying sheet, surface-modified member and coated article were prepared in the same manners as in Example 1, except that the surface-modifying layer and the release sheet were changed as shown in Table 4.

### [Comparative Example 3]

A surface-modifying layer was not provided on a glass fiber reinforced polyphenylene sulfide (size: width 200 mm × length 200 mm × thickness 2 mm), and 99KOBO, body pen solid, manufactured by SOFT99 Corporation was directly applied with a spray. Thus, a coated article having a coating film with a thickness of 100 µm was prepared.

### [Comparative Example 4]

A coated article was prepared in the same manner as in Example 12, except that a surface-modifying layer was not provided.

### [Comparative Example 5]

A coated article was prepared in the same manner as in Example 13, except that a surface-modifying layer was not provided.

### [Comparative Examples 6, 7 and 10 to 13]

Coated articles were prepared in the same manner as in Example 14, except that a surface-modifying layer was not provided, and the paint and the resin member were changed as shown in Table 5.

### [Comparative Examples 8 and 9]

Coated articles were prepared in the same manner as in Example 1, except that a surface-modifying layer was not provided, and the paint and the resin member were changed as shown in Table 5.

### [Comparative Examples 14, 15 and 21]

Coated articles were prepared in the same manner as in Example 22, except that a surface-modifying layer was not provided.

### [Comparative Examples 16 to 20 and 22 to 24]

Coated articles were prepared in the same manner as in Example 14, except that a surface-modifying layer was not provided, and the paint and the resin member were changed as shown in Table 6.

Tables 1 to 6 are shown below.

### [Table 1]

**TABLE 1**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| | Release Sheet | Part number | NITOFLON 900UL | | | | | NITOFLON 900UL | NITOFLON 900UL | OPULENT X-88B | NITOFLON 900UL | NITOFLON 900UL | NITOFLON 900UL |
| | | Material | PTFE | | | | | PTFE | PTFE | Polymethyl pentene | PTFE | PTFE | PTFE |
| | | Melting point (°C) | 320 | | | | | 320 | 320 | 230 | 320 | 320 | 320 |
| Surface-modifying sheet | | Tensile modulus (MPa) | 180 | | | | | 180 | 180 | 11 | 180 | 180 | 180 |
| | | Average thickness (µm) | 30 | 50 | 100 | 50 | 50 | 50 | 50 | 50 | 50 | 50 | 50 |
| | Surface-modifying layer | Average thickness (µm) | 5 | 5 | 5 | 1 | 10 | 40 | 20 | 5 | 5 | 5 | 5 |
| | | Maximum thickness (µm) | 8 | 8 | 8 | 1.5 | 15 | 45 | 23 | 8 | 8 | 8 | 8 |
| | | Minimum thickness (µm) | 2 | 2 | 2 | 0.5 | 8 | 35 | 17 | 2 | 2 | 2 | 2 |
| | | Number of concave-convex defects (number/100 cm²) | 0 | 0 | 0 | 0 | 0 | 0 | 0 | 0 | 0 | 0 | 0 |
| Resin member | | | GF-PPS | GF-PPS | GF-PPS | GF-PPS | GF-PPS | CF-PPS | CF-PPS | GF-PPS | CF-PA6 | CF-thermoplastic epoxy | CF-thermoplastic epoxy |
| Paint | | | 99KOBO Body Pen Solid (manufactured by SOFT99 Corporation) | | | | | | | | | | |
| Coating appearance | Number of concave-convex defect (number/100 cm²) | | 0 | 0 | 0 | 0 | 0 | 0 | 0 | 0 | 0 | 0 | 0 |
| Molded article appearance | Appearance defect | | ○ | ○ | ○ | ○ | ○ | ○ | ○ | ○ | ○ | ○ | ○ |
| Cross-cut peel test | Peeled place (number/100) | | 0 | 0 | 0 | 0 | 0 | 0 | 0 | 0 | 0 | 0 | 0 |

### [Table 2]

**TABLE 2**

| | | | Example12 | Example 13 | Example 14 | Example 15 | Example 16 | Example 17 | Example 18 | Example 19 | Example 20 | Example 21 |
|---|---|---|---|---|---|---|---|---|---|---|---|---|
| S urface-modifying sheet | Release Sheet | Part number | NITOFLON 900UL | | | | | | | | | |
| | | Material | PTFE | | | | | | | | | |
| | | Melting point (°C) | 320 | | | | | | | | | |
| | | Tensile modulus (MPa) | 180 | | | | | | | | | |
| | | Average thickness (µm) | 50 | | | | | | | | | |
| | Surface-modifying layer | Average thickness (µm) | 5 | | | | | | | | | |
| | | Maximum thickness (µm) | 8 | | | | | | | | | |
| | | Minimum thickness (µm) | 2 | | | | | | | | | |
| | | Number of concave-convex defect (number/100 cm²) | 0 | | | | | | | | | |
| Resin member | | | CF-PPS | CF-thermoplastic epoxy | CF-PPS | CF-thermoplastic epoxy | CF-PPS | CF-thermoplastic epoxy | CF-PPS | CF-thermoplastic epoxy | CF-PPS | CF-thermoplastic epoxy |
| Paint | | | ACRYTHANE HMG5 LZ08 (Dai Nippon Toryo) | | Floor Coat Acryl (Dai Nippon Toryo) | | Water-based Multipurpose Spray Red (Asahipen Corporation) | | EPONIX #10 Topcoat (Dai Nippon Toryo) | | EPONIX NC For Wall (Dai Nippon Toryo) | |
| Coating appearance | Number of concave-convex defect (number/100 cm²) | | 0 | 0 | 0 | 0 | 0 | 0 | 0 | 0 | 0 | 0 |
| Molded article appearance | Appearance defect | | ○ | ○ | ○ | ○ | ○ | ○ | ○ | ○ | ○ | ○ |
| Cross-cut peel test | Peeled place (number/100) | | 2 | 0 | 55 | 5 | 5 | 0 | 0 | 0 | 1 | 0 |

### [Table 3]

**TABLE 3**

| | | | Example 22 | Example 23 | Example 24 | Example 25 | Example 26 | Example 27 | Example 28 | Example 29 | Example 30 | Example 31 | Example 32 |
|---|---|---|---|---|---|---|---|---|---|---|---|---|---|
| Surface-modifying sheet | Release Sheet | Part number | NIFUTLON 900UL | | | | | | | | | | |
| | | Material | PTFE | | | | | | | | | | |
| | | Melting point (°C) | 320 | | | | | | | | | | |
| | | Tensile modulus (MPa) | 183 | | | | | | | | | | |
| | | Average thickness (µm) | 50 | | | | | | | | | | |
| | Surface-modifying layer | Average thickness (µm) | 5 | | | | | | | | | | |
| | | Maximum thickness (µm) | 8 | | | | | | | | | | |
| | | Minimum thickness (µm) | 2 | | | | | | | | | | |
| | | Number of concave-convex defects (number/100 cm²) | 0 | | | | | | | | | | |
| Resin member | | | CF-PPS | CF-thermoplastic epoxy | CF-PPS | CF-thermoplastic epoxy | CF-PPS | CF-thermoplastic epoxy | CF-thermoplastic epoxy | CF-PPS | CF-PPS | CF-PPS | CF-thermoplastic epoxy |
| Paint | | | V CROMA#100CW (Dai Nippon Toryo) | | V TOP H Topcoat (Dai Nippon Toryo) | | Water-based V TOP #100 Topcoat (Dai Nippon Toryo) | | Silicone Ruben Two-Pack EXTRA (Dai Nippon Toryo) | V FLON #2000 Topcoat (Dai Nippon Toryo) | V FLON #200 Topcoat (Dai Nippon Toryo) | V FLON #100H Topcoat (Dai Nippon Toryo) | |
| Coating appearance | Number of concave-convex defect (number/100 cm²) | | 0 | 0 | 0 | 0 | 0 | 0 | 0 | 0 | 0 | 0 | 0 |
| Molded article appearance | Appearance defect | | ○ | ○ | ○ | ○ | ○ | ○ | ○ | ○ | ○ | ○ | ○ |
| Cross-cut peel test | Peeled place (number/100) | | 10 | 0 | 0 | 6 | 3 | 1 | 0 | 0 | 11 | 7 | 0 |

### [Table 4]

**TABLE 4**

| | | | Example 33 | Example 34 | Comparative Example 1 | Comparative Example 2 | Comparative Example 3 |
|---|---|---|---|---|---|---|---|
| Surface-modifying sheet | Release Sheet | Part number | FOS | MRF-38 | | NITOFLON 900UL | |
| | | Material | PP | PET/silicone treatment | | PTFE | |
| | | Melting point (°C) | 160 | 260 | | 320 | |
| | | Tensile modulus (MPa) | 500 | 3000 | | 180 | |
| | | Average thickness (µm) | 50 | 38 | | 50 | |
| | Surface-modifying layer | Average thickness (µm) | 5 | 5 | 30 | 7 | |
| | | Maximum thickness (µm) | 8 | 8 | 50 | 100 | |
| | | Minimum thickness (µm) | 2 | 2 | 10 | 4 | |
| | | Number of concave-convex defect (number/100 cm²) | 0 | 0 | 0 | 5 | |
| Resin member | | | GF-PPS | GF-PPS | CF-PPS | GF-PPS | CF-PPS |
| Paint | | | 99KOBO Body Pen Solid (manufactured by SOFT99 Corporation) | | | | |
| Coating appearance | Number of concave-convex defect (number/100 cm²) | | 0 | 0 | 0 | 0 | 0 |
| Molded article appearance | Appearance defect | | × Wrinkles | × Wrinkles | ○ | ○ | ○ |
| Cross-cut peel test | Peeled place (number/100) | | 5 | 5 | 100 | 3 | 100 |

### [Table 5]

**TABLE 5**

| | | | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|
| Surface-modifying sheet | Release sheet | Part number | | | | | | | | | | |
| | | Material | | | | | | | | | | |
| | | Melting point (°C) | | | | | | | | | | |
| | | Tensile modulus (MPa) | | | | | | | | | | |
| | | Average thickness (µm) | | | | | | | | | | |
| | Surface-modifying layer | Average thickness (µm) | | | | | | | | | | |
| | | Maximum thickness (µm) | | | | | | | | | | |
| | | Minimum thickness (µm) | | | | | | | | | | |
| | | Number of concave-convex defect (number/100 cm²) | | | | | | | | | | |
| Resin member | | | CF-PPS | CF-thermoplastic epoxy | CF-PPS | CF-thermoplastic epoxy | CF-PPS | CF-thermoplastic epoxy | CF-PPS | CF-thermoplastic epoxy | CF-PPS | CF-thermoplastic epoxy |
| Paint | | | ACRYTHANE HMG5 LZ08 (Dai Nippon Torvo) | | Floor Coat Acryl (Dai Nippon Toryo) | | Water-based Multipurpose Spray Red (Asahipen Corporation) | | EPONIX #10 Topcoat (Dai Nippon Toryo) | | EPONIX NC For Wall (Dai Nippon Toryo) | |
| Coating appearance | Number of concave-convex defects (number/100 cm²) | | 0 | 0 | 0 | 0 | 0 | 0 | 0 | 0 | 0 | 0 |
| Molded article appearance | Appearance defect | | ○ | ○ | ○ | ○ | ○ | ○ | ○ | ○ | ○ | ○ |
| Cross-cut peel test | Peeled place (number/100) | | 99 | 100 | 100 | 100 | 37 | 100 | 100 | 90 | 23 | 100 |

### [Table 6]

**TABLE 6**

| | | | Comparative Example 14 | Comparative Example15 | Comparative Example 16 | Comparative Example 17 | Comparative Example 18 | Comparative Example 19 | Comparative Example 20 | Comparative Example 21 | Comparative Example 22 | Comparative Example 23 | Comparative Example 24 |
|---|---|---|---|---|---|---|---|---|---|---|---|---|---|
| | Release sheet | Part number | | | | | | | | | | | |
| | | Material | | | | | | | | | | | |
| | | Melting point (°C) | | | | | | | | | | | |
| | | Tensile modulus (MPa) | | | | | | | | | | | |
| Surface-modifying sheet | | Average thickness (µm) | | | | | | | | | | | |
| | Surface-modifying layer | Average thickness (µm) | | | | | | | | | | | |
| | | Maximum thickness (µm) | | | | | | | | | | | |
| | | Minimum thickness (µm) | | | | | | | | | | | |
| | | Number of concave-convex defect (number/100 cm²) | | | | | | | | | | | |
| Resin member | | | CF-PPS | CF-thermoplastic epoxy | CF-PPS | CF-thermoplastic epoxy | CF-PPS | CF-thermoplastic epoxy | CF-thermoplastic epoxy | CF-PPS | CF-PPS | CF-PPS | CF-thermoplastic epoxy |
| Paint | | | V CROMA#100CW (Dai Nippon Toryo) | | V TOP H Topcoat (Dai Nippon Toryo) | | Water-based V TOP #100H Topcoat (Dai Nippon Toryo) | | Silicone Ruben Two-Pack EXAMPLETR A (Dai Nippon Toryo) | V FLON #2000 Topcoat (Dai Nippon Toryo) | V FLON #200 Topcoat (Dai Nippon Toryo) | V FLON #100H Topcoat (Dai Nippon Toryo) | |
| Coating appearance | Number of concave-convex defect (number/100 cm²) | | 0 | 0 | 0 | 0 | 0 | 0 | 0 | 0 | 0 | 0 | 0 |
| Molded article appearance | Appearance defect | | ○ | ○ | ○ | ○ | ○ | ○ | ○ | ○ | ○ | ○ | ○ |
| Cross-cut peel test | Peeled place (number/100) | | 94 | 2 | 95 | 100 | 100 | 79 | 100 | 88 | 87 | 100 | 28 |

Materials described in Tables 1 to 6 are as follows

### [Release sheet]

NIFUTLON 900UL: Fluorine resin sheet film (polytetrafluoroethylene (PTFE)), manufactured by Nitto Denko Corporation
OPULENT (registered trademark) X-88B: Polymethyl pentene resin sheet, manufactured by Mitsui Chemicals Tohcello Inc.
FOS: Polyolefin resin sheet (polypropylene (PP)), manufactured by Futamura Chemical Co., Ltd.
MRF-38: Polyester resin sheet (polyethylene terephthalate (PET)/silicone treatment), manufactured by Mitsubishi Chemical Corporation.

### [Resin member]

GF-PPS: Glass fiber reinforced polyphenylene sulfide resin (Dynalite, manufactured by Sanwa Trading Corporation)
CF-PA6: Carbon fiber reinforced polyamide 6 resin (manufactured by Ichimura Sangyo Co., Ld.)
CF-thermoplastic epoxy: Carbon fiber reinforced thermoplastic epoxy resin (manufactured by Nippon Steel Chemical & Material Co., Ltd.)
CF-thermosetting epoxy: Carbon fiber reinforced thermosetting epoxy resin (TORAYCA, manufactured by Toray Industries, Inc.)
CF-PPS: Carbon fiber reinforced polyphenylene sulfide resin

### [Paint]

99KOBO body pen solid: Acryl resin paint, manufactured by SOFT99 Corporation ACRYTHANE HMG5 LZ08: Manufactured by Dai Nippon Toryo Co., Ltd. Floor Coat Acryl: Manufactured by Dai Nippon Toryo Co., Ltd. Water-based Multipurpose Spray Red, manufactured by Asahipen Corporation

EPONIX #10 Topcoat: Epoxy resin, Topcoat paint, manufactured by Dai Nippon Toryo Co., Ltd.

EPONIX NC For Wall: Epoxy resin, non-solvent type, for wall, manufactured by Dai Nippon Toryo Co., Ltd.

V CROMA #100CW: Urethane resin paint, manufactured by Dai Nippon Toryo Co., Ltd.

V TOP H Topcoat: Polyurethane resin paint, topcoat paint, manufactured by Dai Nippon Toryo Co., Ltd.

Water-based V TOP #100H Topcoat: Water-based polyurethane resin, topcoat paint, manufactured by Dai Nippon Toryo Co., Ltd.

Silicone Ruben two-pack EXTRA: Weak solvent type silicone resin galvanized iron paint, manufactured by Dai Nippon Toryo Co., Ltd.

V FLON #2000 Topcoat: Medium temperature baking thermosetting fluorine resin type paint, manufactured by Dai Nippon Toryo Co., Ltd.

V FLON #200 Topcoat: Fluorine resin paint for building, manufactured by Dai Nippon Toryo Co., Ltd.

Water-based V FLON #100H Topcoat: Water-based fluorine resin, topcoat paint, manufactured by Dai Nippon Toryo Co., Ltd.

### [Evaluation]

### <Coating appearance (number of concave-convex defect)>

The number of concave-convex defect (number/100 cm²) of a coated article prepared was visually counted.

### <Molded article appearance>

The presence or absence of appearance defect of the molded article prepared was visually confirmed. When wrinkles due to a release sheet were not confirmed on the appearance of the molded article, it was defined as "O", and when wrinkles due to a release sheet were confirmed in even one place on the appearance of the molded article, it was defined as "×".

### <Cross-cut peel test>

The coated article prepared was evaluated by the following cross-cut peel test. Specifically, cuts (11×11) were formed at intervals of 10 mm by a cutter knife on the surface of the coated surface of the coated article obtained, and 100 cross-cuts were formed.

Adhesive tape (manufactured by Nichiban Co., Ltd.) was adhered to the part of cross-cuts and then peeled off at an angle of 45° in a rate of 100 mm/min. Adhesive strength was evaluated by the number of cross-cuts (number/100) of the coating film peeled from the coated article.

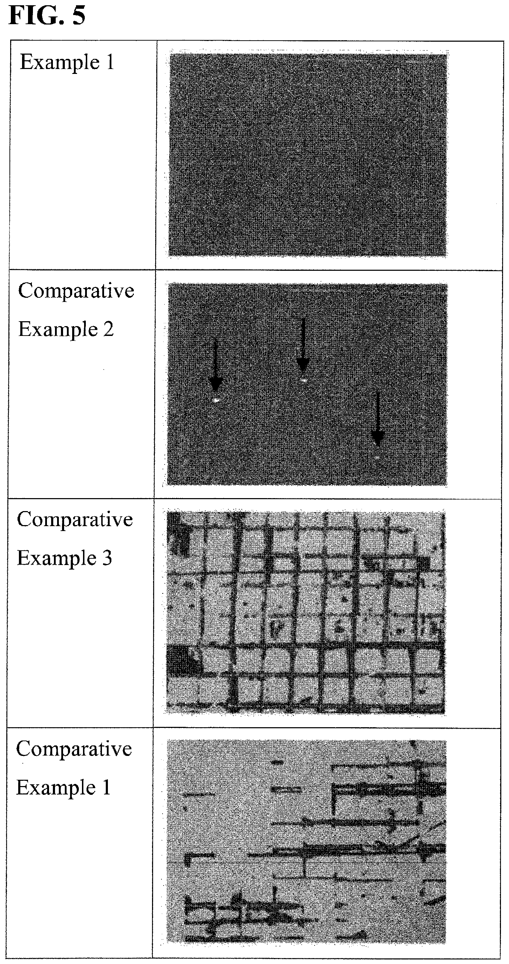

The number of cross-cuts of the coating film peeled is shown in Table 1. Furthermore, views showing photographs of the results of the cross-cut peel test of the coated articles according to Example 1 and Comparative Examples 1, 2 and 3 were shown in FIG. 5.

Although the present invention has been described in detail and by reference to the specific embodiments, it is apparent to one skilled in the art that various modifications or changes can be made without departing the spirit and scope of the present invention.

This application is based on Japanese Patent Application No. 2018-085671 filed on April 26, 2018, and Japanese Patent Application No. 2019-082961 filed on April 24, 2019, the contents of which are incorporated herein by reference.

### REFERENCE SIGNS LIST

- 10:: Surface-modifying layer
- 20:: Release sheet
- 100:: Resin member
- 200:: Surface-modifying sheet
- 300:: Coated article

## Claims

1. A surface-modifying sheet comprising a release sheet and a surface-modifying layer,
wherein the surface-modifying layer has an average thickness of 0.1 µm to 50 µm and the difference between the maximum value and the minimum value of the thickness of the surface-modifying layer is less than twice the average thickness.

2. The surface-modifying sheet according to claim 1, wherein concave-convex defect is not present on the surface of the surface-modifying layer.

3. The surface-modifying sheet according to claim 1 or 2, wherein the surface-modifying layer contains a polymer component, and the polymer component contains at least one selected from a methoxymethyl group-containing polymer, a hydroxy group-containing polymer, a carboxyl group-containing polymer and an amino group-containing polymer.

4. The surface-modifying sheet according to any one of claims 1 to 3, wherein the release sheet has a melting point of 200°C or higher and tensile modulus at 100°C of 1 GPa or less.

5. A surface-modified prepreg in which the surface-modifying layer of the surface-modifying sheet according to any one of claims 1 to 4 is laminated on at least a part of the surface of a resin member,
wherein a mixed layer that the resin member and the surface-modifying layer are mixed is provided between the resin member and the surface-modifying layer.

6. A surface-modified member in which the surface-modifying layer of the surface-modifying sheet according to any one of claims 1 to 4 is laminated on at least a part of the surface of a resin member,
wherein a mixed layer that the resin member and the surface-modifying layer are mixed is provided between the resin member and the surface-modifying layer.

7. A coated article in which a coating film is provided on at least a part of the surface of the surface-modifying layer-side of the surface-modified member according to claim 6.

8. The coated article according to claim 7, wherein the coating film is at least one selected from a paint, a printed layer, a deposited layer and a plated layer.

9. A method for producing a coated article, comprising:
placing the surface-modifying layer-side of the surface-modifying sheet according to any one of claims 1 to 4 on at least a part of the surface of a resin member to form a surface-modified member, and
forming a coating film on the surface-modifying layer-side of the surface-modified member.

10. The method for producing a coated article according to claim 9, wherein the resin member contains a thermoplastic resin or a thermosetting resin.

11. The method for producing the coated article according to claim 9 or 10, wherein the surface-modified member is formed by resin molding.

12. A method for producing a coated article in which a coating film is provided on at least a part of a surface-modified member in which a surface-modifying layer is laminated on a resin member,
wherein the resin member contains a thermoplastic resin having a melting point of T₁°C, and
the method comprising:
providing the surface-modifying layer on at least a part of the surface of the resin member, and performing heat-welding at a temperature of (T₁-50)°C or higher, thereby forming the surface-modified member, and
forming the coating film on the surface-modifying layer-side of the surface-modified member.

13. A method for producing a coated article in which a coating film is provided on at least a part of a surface-modified member in which a surface-modifying layer is laminated on a resin member,
wherein the resin member contains a thermosetting resin having a curing temperature of T₂°C, and
the method comprising:
providing the surface-modifying layer on at least a part of the surface of the resin member, and performing heat-molding at a temperature of T₂°C or higher, thereby forming the surface-modified member, and
forming the coating film on the surface-modifying layer-side of the surface-modified member.

14. The method for producing a coated article according to claim 12 or 13, wherein the heat molding is performed by resin molding.

15. The method for producing a coated article according to claim 14, wherein the molding of the resin member is performed by the resin molding.

16. The method for producing a coated article according to any one of claims 12 to 15, comprising:
placing the surface-modifying layer-side of the surface-modifying sheet that is a laminate of a release sheet and the surface-modifying layer on at least a part of the surface of the resin member, thereby forming the surface-modified member; and
forming the coating film on the surface-modifying layer-side of the surface-modified member.

17. The method for producing a coated article according to claim 16, wherein the release sheet is removed after the heat molding.

18. A method for producing a coated article in which a coating film is provided at least a part of a surface-modified member in which a surface-modifying layer is laminated on a resin member, the method comprising:
making at least a part of the surface of the resin member into a molten state or a softened state and then providing the surface-modifying layer on the surface of the resin member in a molten state or a softened state, thereby forming the resin member; and
forming a coating film on the surface-modifying layer-side of the resin member.

19. The method for producing a coated article according to any one of claims 12 to 18, wherein the surface-modifying layer contains a polymer component and the polymer component has a non-polar unit and a polar unit having a polar group.

20. The method for producing a coated article according to claim 19, wherein the polymer component is at least one selected from a methoxymethyl group-containing polymer, a hydroxy group-containing polymer, a carboxyl group-containing polymer and an amino group-containing polymer.

21. The method for producing a coated article according to any one of claims 12 to 20, wherein the surface-modifying layer contains at least one selected from a tertiary amine-containing compound and a strong acid.
